# EUROPÄISCHE PATENTSCHRIFT

(11) **EP 2 251 551 B1**
(45) Veröffentlichungstag und Bekanntmachung des Hinweises auf die Patenterteilung: **19.12.2012**
(21) Anmeldenummer: 09006515.2
(22) Anmeldetag: 14.05.2009
(51) Int. Cl.: F15B 13/04

(54) **Ventil**
Valve
Soupape

(43) Veröffentlichungstag der Anmeldung: 17.11.2010
(73) Patentinhaber: FESTO AG & Co. KG, 73734 Esslingen (DE)
(72) Erfinder: Kühbauch, Heiko, 73257 Köngen (DE); Kliem, Maik, 73760 Ostfildern (DE)
(74) Vertreter: Abel, Martin

(56) Entgegenhaltungen:
- EP-A- 0 663 532
- DE-A1- 2 732 773
- DE-B- 1 168 257

## Beschreibung

Die Erfindung betrifft ein Ventil, mit einem ersten und einem zweiten Ventilglied, die axial aufeinanderfolgend und axial relativ zueinander bewegbar in einer gemeinsamen Ventilkammer angeordnet und jeweils axial zwischen einer außenliegenden ersten Schaltstellung und einer innenliegenden zweiten Schaltstellung umschaltbar sind, wobei das erste Ventilglied in seiner ersten Schaltstellung einen ersten Ventilkanal von einem zweiten Ventilkanal abtrennt und in seiner zweiten Schaltstellung den ersten Ventilkanal mit dem zweiten Ventilkanal verbindet, wobei ferner das zweite Ventilglied bei in der ersten Schaltstellung befindlichem ersten Ventilglied den ersten Ventilkanal durch das zweite Ventilglied hindurch mit einem dritten Ventilkanal verbindet und von einem vierten Ventilkanal abtrennt, wenn es sich in der zweiten Schaltstellung befindet und den ersten Ventilkanal bei gleichzeitiger Verbindung mit dem vierten Ventilkanal von dem dritten Ventilkanal abtrennt, wenn es sich in der ersten Schaltstellung befindet derart, dass der erste Ventilkanal bei gleichzeitiger Abtrennung von den jeweiligen anderen Ventilkanälen alternativ mit dem zweiten, dritten oder vierten Ventilkanal verbindbar ist.

Aus der EP 0 663 532 A1 ist ein Ventil bekannt, das über zwei axial aufeinanderfolgend in einer Ventilkammer angeordnete, als Ventilschieber ausgebildete Ventilglieder verfügt, die unabhängig voneinander zwischen jeweils einer ersten und einer zweiten Schaltstellung umschaltbar sind und die jeweils derart ausgebildet sind, dass sie eine 3/2-Wege-Ventil-funktion ausüben können. Beiden Ventilgliedern ist ein als Speisekanal nutzbarer erster Ventilkanal gemeinsam zugeordnet, der gleichzeitig oder alternativ mit einem von dem ersten Ventilglied kontrollierten zweiten Ventilkanal und/oder mit einem von dem zweiten Ventilglied kontrollierten dritten Ventilkanal verbindbar ist. Bei dem zweiten Ventilkanal und dem dritten Ventilkanal handelt es sich um einen Arbeitskanal. Jeder dieser Arbeitskanäle kann durch entsprechende Schaltstellung des zugeordneten Ventilgliedes alternativ zum Speisekanal mit einem als Entlüftungskanal fungierenden vierten Ventilkanal verbunden werden. Würde man sowohl den zweiten als auch den dritten Ventilkanal zur Einspeisung eines Druckmediums nutzen, bestünde die Möglichkeit, den ersten Ventilkanal durch wahlweises Verbinden mit dem zweiten oder dritten Ventilkanal mit unterschiedlichen Betriebsdrücken zu beaufschlagen.

Es existieren Anwendungsfälle für Fluidsteuerungen, bei denen ein und derselbe Verbraucher in einer gewissen Aufeinanderfolge mit wenigstens drei unterschiedlichen Betriebsdrücken zu versorgen ist, wobei es sich bei diesen Betriebsdrücken um atmosphärischen Überdruck oder um atmosphärischen Unterdruck bzw. Vakuum handeln kann. Ein solcher Anwendungsfall ist das pneumatisch gesteuerte Melken von Kühen, wo die Melkapparatur für optimale Anwendung wahlweise mit Atmosphärendruck und zwei unterschiedlich hohen Unterdrücken beaufschlagt werden sollte. Soweit der Anmelderin bekannt, werden dafür bisher stets mehrere Ventile gleichzeitig eingesetzt, die in aufeinander abgestimmte Weise betätigt werden. Der damit verbundene konstruktive und steuerungstechnische Aufbau ist sehr hoch.

Die DE 11 68 257 B offenbart ein Ventil der eingangs genannten Art, das zwei relativ zueinander bewegbare Ventilglieder aufweist, die in Abhängigkeit von ihrer Relativpostion in der Lage sind, einen ersten Ventilkanal alternativ mit einem zweiten, einem dritten oder einem vierten Ventilkanal zu verbinden. Eine vergleichbare Funktionalität weist ein in der DE 27 32 773 A1 beschriebenes Ventil auf.

Aufgabe der Erfindung ist es, Maßnahmen zu treffen, die auf einfache und kostengünstige Weise eine vielfältige Ansteuerung eines fluidischen Verbrauchers ermöglichen.

Zur Lösung dieser Aufgabe ist das Ventil derart ausgebildet, dass die in der ersten Schaltstellung des zweiten Ventilgliedes vorliegende Fluidverbindung zwischen dem ersten Ventilkanal und dem vierten Ventilkanal durch das zweite Ventilglied hindurch erfolgt.

Das erfindungsgemäße Ventil schafft somit die Möglichkeit, ein und denselben Ventilkanal wahlweise mit drei verschiedenen Drücken zu beaufschlagen, die an den anderen drei Ventilkanälen angelegt werden. Der in dem ersten Ventilkanal vorherrschende und abgreifbare Druck bestimmt sich allein durch die relativ zueinander und relativ zur Ventilkammer eingenommene Schaltstellung der beiden Ventilglieder und kann folglich allein durch interne Fluidkanäle des Ventils bereitgestellt werden, ohne auf eine aufwändige externe Verschlauchung zurückgreifen zu müssen, wie sie erforderlich wäre, wenn man zum Erhalt des gleichen Ergebnisses auf mehrere einzelne Ventile zurückgreifen würde. Sowohl die Fluidverbindung zwischen dem ersten und vierten Ventilkanal als auch die Fluidverbindung zwischen dem ersten und dritten Ventilkanal erfolgt durch das zweite Ventilglied hindurch. Die Vereinigung der erfindungsgemäßen Funktionalität in einem einzigen Ventil ermöglicht auch die Einhaltung kompakter Abmessungen und eine kostengünstige Herstellung.

Vorteilhafte Weiterbildungen der Erfindung gehen aus den Unteransprüchen hervor.

Vorzugsweise sind die vier Ventilkanäle derart in einem Ventilgehäuse des Ventils verlaufend angeordnet, dass der erste und der vierte Ventilkanal bezogen auf die Längsrichtung der Ventilkammer axial zwischen dem zweiten und dem dritten Ventilkanal in die Ventilkammer einmünden. Die Zuordnung zu den anderen Ventilkanälen ist dabei so getroffen, dass der erste Ventilkanal an einer Stelle in die Ventilkammer einmündet, die zu dem zweiten Ventilkanal unmittelbar benachbart ist, während die Einmündung des vierten Ventilkanals axial benachbart zur Einmündung des dritten Ventilkanals stattfindet. Mit anderen Worten liegen also die Einmündungen des ersten und zweiten Ventilkanals einerseits und die Einmündungen des vierten und dritten Ventilkanals andererseits unmittelbar nebeneinander, wobei gleichzeitig die Einmündungen des ersten und vierten Ventilkanals nebeneinander angeordnet sind. Mit dieser Einmündungsreihenfolge lässt sich die erfindungsgemäße fluidische Verschaltung besonders leicht realisieren.

Die beiden Ventilglieder sind zweckmäßigerweise kolbenförmig ausgebildet, so dass sie in optimaler Weise in der Ventilkammer verschiebbar geführt angeordnet werden können.

Zweckmäßigerweise ist jedes Ventilglied durch Federmittel in eine Grundstellung vorgespannt, bei der es sich um die erste Schaltstellung handelt. Realisierbar wäre diese Vorspannung beispielsweise durch zwischen den Ventilgliedern wirksame Federmittel. Zweckmäßiger wird allerdings eine Anordnung angesehen, bei der jedem Ventilglied eigene Federmittel zugeordnet sind, die sich jeweils zwischen dem betreffenden Ventilglied und einem die Ventilkammer definierenden Gehäuse abstützen und die zweckmäßigerweise das jeweils zugeordnete Ventilglied koaxial umschließen.

Das Ventil ist zweckmäßigerweise als vorgesteuertes Ventil ausgebildet. Es enthält zu diesem Zweck eine Vorsteuerventileinrichtung, die es ermöglicht, jedes Ventilglied mittels Fluidkraft gesteuert in die gewünschte Schaltstellung zu verbringen.

Vorzugsweise erfolgt die Steuerung der Fluidströme innerhalb des Ventils ausschließlich durch Sitzventilstrukturen. Hierzu werden in der Ventilkammer ausgebildete Fluiddurchlässe insbesondere dadurch abwechselnd freigegeben oder verschlossen, dass sie von axial orientierten Ventilsitzen umgeben sind, die mit am zugeordneten Ventilglied angeordneten Sitzventilabschnitten kooperieren. Die Sitzventiltechnik hat den Vorteil, dass die Verschmutzungsanfälligkeit verglichen mit radial dichtenden Ventilschiebersystemen erheblich reduziert ist und auch eine diesbezüglich wesentlich höhere Schaltzeitkonstanz garantiert werden kann. Letzteres bedeutet, dass das Ventil kaum von Fertigungstoleranzen beeinflusst wird und auch ohne aufwändige Qualitätssicherungsmaßnahmen eine reproduzierbare Funktionalität gewährleistet werden kann.

Bei einer besonders zweckmäßigen Ausgestaltung mündet der erste Ventilkanal seitlich in einen ersten Ventilkammerabschnitt ein, der über einen von einem ihm axial zugewandten Ventilsitz umrahmten ersten Fluiddurchlass mit einem axial weiter außen liegenden zweiten Ventilkammerabschnitt verbunden ist, der mit dem zweiten Ventilkanal kommuniziert. Die Fluidverbindung zwischen dem ersten und dem zweiten Ventilkammerabschnitt wird hierbei durch einen an dem ersten Ventilglied angeordneten ersten Sitzventilabschnitt gesteuert, der mit einem bezüglich der Ventilkammer ortsfesten ersten Ventilsitz zusammenwirkt.

Der dritte Ventilkanal mündet in einen dritten Ventilkammerabschnitt ein, der zweckmäßigerweise über einen zweiten Fluiddurchlass mit einem sich zum anderen Ventilglied hin anschließenden weiteren Ventilkammerabschnitt verbunden ist, wobei dieser zweite Fluiddurchlass von einem zweiten Ventilsitz umrahmt ist. Die Fluidverbindung wird hier durch einen an dem zweiten Ventilglied angeordneten zweiten Sitzventilabschnitt gesteuert, der in dem weiteren Ventilkammerabschnitt angeordnet ist und mit einem ortsfest bezüglich der Ventilkammer angeordneten zweiten Ventilsitz zusammenwirkt.

Der weitere Ventilkammerabschnitt steht zweckmäßigerweise mit einem ihm axial benachbarten vierten Ventilkammerabschnitt in Verbindung, wobei auch diese Verbindung durch eine Sitzventilstruktur steuerbar ist, die einen am zweiten Ventilglied angeordneten dritten Sitzventilabschnitt aufweist. Die Anordnung ist so getroffen, dass der weitere Ventilkammerabschnitt mit dem dritten Ventilkammerabschnitt kommuniziert, wenn das zweite Ventilglied die zweite Schaltstellung einnimmt, und dass der weitere Ventilkammerabschnitt mit dem vierten Ventilkammerabschnitt kommuniziert, wenn das zweite Ventilglied seine erste Schaltstellung einnimmt. Außerdem wird der weitere Ventilkammerabschnitt durch das erste Ventilglied in dessen erster Schaltstellung mit dem ersten Ventilkanal verbunden und in dessen zweiter Schaltstellung von dem ersten Ventilkanal abgetrennt.

Die Fluidverbindung zwischen dem weiteren Ventilkammerabschnitt und dem ersten Ventilkanal erfolgt vorzugsweise durch das zweite Ventilglied hindurch. Als besonders vorteilhaft wird eine Ausgestaltung erachtet, bei der dem ersten Ventilglied eine Sitzventilstruktur zugeordnet ist, die die Verbindung zwischen einem mit dem ersten Ventilkanal kommunizierenden ersten Ventilkammerabschnitt und einem sich axial daran anschließenden Übergangs-Ventilkammerabschnitt steuert, wobei mit diesem Übergangs-Ventilkammerabschnitt unter Abdichtung und axial gleitverschieblich ein Überbrückungsabschnitt des zweiten Ventilgliedes in Eingriff steht. Der Überbrückungsabschnitt ist zweckmäßigerweise rohrförmig ausgebildet und kann mehr oder weniger weit in den Übergangs-Ventilkammerabschnitt eintauchen. Der Überbrückungsabschnitt ist von einem Überbrückungskanal durchsetzt und erstreckt sich seinerseits durch einen mit dem vierten Ventilkanal kommunizierenden vierten Ventilkammerabschnitt hindurch, den er somit quasi überbrückt. Der Überbrückungskanal mündet zu einem weiteren Ventilkammerabschnitt aus, der sich axial an den vierten Ventilkammerabschnitt anschließt und der durch jeweils eine dem zweiten Ventilglied zugeordnete Sitzventilstruktur alternativ mit entweder dem vierten Ventilkammerabschnitt oder einem axial entgegengesetzten, mit dem dritten Ventilkanal kommunizierenden dritten Ventilkammerabschnitt verbindbar ist.

Auf diese Weise erfolgt durch den ständig mit dem Übergangs-Ventilkammerabschnitt kommunizierenden Überbrückungskanal hindurch in Abhängigkeit von der Schaltstellung des zweiten Ventilgliedes eine Verbindung mit entweder dem vierten Ventilkanal oder dem dritten Ventilkanal. Der Übergangs-Ventilkammerabschnitt seinerseits kann durch entsprechende Positionierung des ersten Ventilgliedes wahlweise mit dem ersten Ventilkanal fluidisch verbunden oder von diesem ersten Ventilkanal abgetrennt werden.

Zweckmäßigerweise sind die beiden Ventilglieder unabhängig voneinander in ihren beiden Schaltstellungen positionierbar. Es kann also jedes Ventilglied unabhängig von der Schaltstellung des anderen Ventilgliedes jede seiner beiden möglichen Schaltstellungen einnehmen.

Es besteht die Möglichkeit, einen fünften Ventilkanal vorzusehen, der in den weiteren Ventilkammerabschnitt einmündet und der optional nutzbar ist. Beispielsweise kann dieser fünfte Ventilkanal anstelle des vierten Ventilkanals genutzt werden.

Nachfolgend wird die Erfindung anhand der beiliegenden Zeichnung näher erläutert. In dieser zeigen:
- Figur 1: einen Längsschnitt durch das erfindungsgemäße Ven- til bei Einnahme seines Grundzustandes,
- Figur 2: das Ventil aus Figur 1 bei Einnahme des Grundzu- standes und ohne Abbildung der zu seiner Betätigung dienenden Vorsteuerventileinrichtung,
- Figur 3: einen weiteren Betriebszustand des Ventils, wobei das erste Ventilglied die zweite Schaltstellung und das zweite Ventilglied die erste Schaltstellung einnimmt,
- Figur 4: einen weiteren Betriebszustand des Ventils, in dem das erste Ventilglied die erste Schaltstellung und das zweite Ventilglied die zweite Schaltstellung einnimmt, und
- Figur 5: einen weiteren Betriebszustand des Ventils, in dem das erste Ventilglied die zweite Schaltstellung und das zweite Ventilglied die zweite Schaltstellung einnimmt.

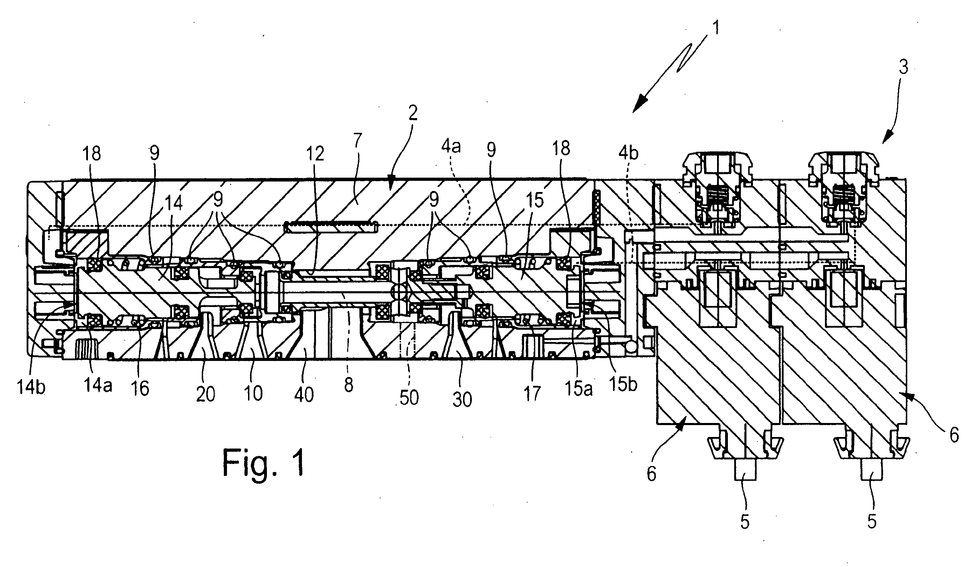

Das insgesamt mit Bezugsziffer 1 bezeichnete, in Figur 1 in seiner Gesamtheit abgebildete Ventil 1 ist vorzugsweise als elektropneumatisch vorgesteuertes Mehrwegeventil ausgebildet. Es verfügt über eine Hauptventileinrichtung 2 und eine insbesondere stirnseitig daran angesetzte Vorsteuerventileinrichtung 3. Die Vorsteuerventileinrichtung 3 kann über an elektrischen Anschlussmitteln 5 von außen her einspeisbare elektrische Steuersignale aktiviert werden, um in einen oder beide von zwei Vorsteuerkanälen 4a, 4b ein fluidisches Steuersignal auszugeben. Die beiden Vorsteuerkanäle 4a, 4b sind lediglich gestrichelt und auch nur in Figur 1 angedeutet. Die beiden Vorsteuerkanäle 4a, 4b sind unabhängig voneinander mit einem fluidischen Steuersignal beaufschlagbar, indem jedem Vorsteuerkanal 4a, 4b eine eigene elektrofluidische Vorsteuereinheit 6 zugeordnet ist, die in der Lage ist, den betreffenden Vorsteuerkanal 4a, 4b mit einem das fluidische Steuersignal liefernden Betätigungsfluid zu beaufschlagen oder druckmäßig zu entlasten. In der Regel wird Druckluft als Betätigungsfluid eingesetzt, es ist jedoch auch ein Betrieb mit einem anderen Druckgas oder mit einem flüssigen Druckmedium möglich.

Die beiden Vorsteuereinheiten 6 bestehen jeweils aus einem Vorsteuerventil, insbesondere ein Magnetventil oder ein Piezoventil mit jeweils 3/2-Wege-Ventilfunktion.

Die Hauptventileinrichtung 2 enthält ein Ventilgehäuse 7 mit einer Längsachse 8 und einer darin ausgebildeten, koaxial zu der Längsachse 8 angeordneten länglichen Ventilkammer 12. Die Ventilkammer 12 besteht aus einer länglichen bohrungsartigen Ausnehmung, in die exemplarisch von beiden Stirnseiten her unter partieller Abdichtung 9 je eine Hülsenanordnung 13 eingesetzt ist, welche bezüglich dem Ventilgehäuse 7 axial ortsfest fixiert ist. Beim Ausführungsbeispiel besteht die Ventilkammer 12 somit aus einem direkt von der Wandung der bohrungsartigen Ausnehmung gebildeten Mittelabschnitt und zwei sich axial beidseits daran anschließenden, vom Innenumfang der Hülsenanordnung 13 gebildeten Endabschnitten.

Die Hülsenanordnungen 13 dienen dazu, Komponenten noch zu erläuternder Sitzventilstrukturen in besonders einfacher Weise zu definieren und montieren zu können. Prinzipiell könnten diese Hülsenanordnungen 13 auch entfallen und die in sie integrierten Funktionalitäten auch in dem Ventilgehäuse 7 ausgebildet sein. Sofern also im Folgenden von Maßnahmen die Rede ist, die sich auf die Hülsenanordnungen 13 beziehen, ist dies so zu verstehen, dass die entsprechenden Maßnahmen auch direkt an dem Ventilgehäuse 7 ausgebildet sein könnten.

In die Ventilkammer 12 ist im Bereich des einen Endabschnittes ein bevorzug kolbenartig ausgebildetes erstes Ventilglied 14 eingesetzt. Ein zweckmäßigerweise ebenfalls kolbenartig aufgebautes zweites Ventilglied 15 befindet sich im entgegengesetzten anderen Endabschnitt der Ventilkammer 12. Beide Ventilglieder 14, 15 sitzen also in ein und derselben, entsprechend lang ausgebildeten Ventilkammer 12 und sind darin insbesondere unabhängig voneinander axial verschiebbar. Die Verschiebbarkeit ermöglicht ein Umschalten jedes Ventilgliedes 14, 15 zwischen einer ersten Schaltstellung und einer zweiten Schaltstellung. Die erste Schaltstellung ist dadurch charakterisiert, dass das betreffende Ventilglied 14, 15 innerhalb der Ventilkammer 12 axial weiter außen angeordnet ist als in der zweiten Schaltstellung, in der es axial weiter innen liegt. Das Umschalten in die erste Schaltstellung erfolgt also durch eine vom jeweils anderen Ventilglied weg orientierte axiale Linearbewegung. Beim Umschalten in die zweite Schaltstellung bewegt sich jedes Ventilglied in Richtung zum anderen Ventilglied.

Vorzugsweise nehmen beide Ventilglieder 14, 15 im deaktivierten Zustand eine von der ersten Schaltstellung gebildete Grundstellung ein. Der deaktivierte Zustand ist dadurch charakterisiert, dass das betreffende Ventilglied 14, 15 nicht mit einem fluidischen Steuersignal aus der Vorsteuerventileinrichtung 3 beaufschlagt ist. In diesem Fall ist eine Betätigungskammer 14a, 15a, an die jeweils einer der Vorsteuerkanäle 4a, 4b angeschlossen ist, durch entsprechenden Betriebszustand der Vorsteuerventileinrichtung 3 drucklos geschaltet.

An jedes Ventilglied 14, 15 schließt sich axial außen, an der dem anderen Ventilglied entgegengesetzten Seite, eine der Betätigungskammern 14a, 15a an, die vom dort liegenden äußeren Endbereich der Ventilkammer 12 gebildet ist. Jede Betätigungskammer 14a, 15a wird von einer vorzugsweise unmittelbar am zugeordneten Ventilglied 14, 15 ausgebildeten Betätigungsfläche 14b, 15b und im Übrigen vom Ventilgehäuse 7 begrenzt, so dass ein darin durch Anlegen eines fluidischen Steuersignals herrschender Betätigungsdruck in der Lage ist, das beaufschlagte erste oder zweite Ventilglied 14, 15 in die zweite Schaltstellung umzuschalten und dort festzuhalten. Durch Entfernen des fluidischen Steuersignals entfällt die Betätigungskraft und das betreffende Ventilglied 14, 15 kehrt in die erste Schaltstellung zurück.

Seine Eigenschaft als Grundstellung erfährt die erste Schaltstellung durch das Vorhandensein von dem ersten Ventilglied 14 zugeordneten ersten Federmitteln 16 und dem zweiten Ventilglied 15 zugeordneten zweiten Federmitteln 17. Diese Federmittel 16, 17, vorzugsweise jeweils als Schraubendruckfeder ausgebildet, sind zwischen dem zugeordneten Ventilglied 14, 15 und dem Ventilgehäuse 7 wirksam und spannen das Ventilglied 14, 15 ständig in Richtung der ersten Schaltstellung vor. Zugunsten einer kompakten Bauweise sitzen die Federmittel 16, 17 vorzugsweise koaxial auf dem zugeordneten Ventilglied 14, 15, wobei die Abstützung bezüglich des Ventilgehäuses 7 zweckmäßigerweise an der zugeordneten Hülsenanordnung 13 erfolgt. Letzteres ergibt sich dadurch, dass zweckmäßigerweise jedes Ventilglied 14, 15 in einer der beiden Hülsenanordnungen 13 axial gleitverschieblich angeordnet ist.

Die Innenumfangsfläche der Hülsenanordnung 13 bildet unter anderem auch eine Dichtfläche, an der ein am Ventilglied 14, 15 angeordneter Dichtungsring 18 gleitverschieblich anliegt, der die Betätigungskammer 14a, 15a von den axial weiter innen liegenden Bereichen der Ventilkammer 12 dichtend abtrennt.

Das Ventil 1 ist in der Lage, mehrere in seinem Innern ausgebildete Ventilkanäle in Abhängigkeit von der von den beiden Ventilgliedern 14, 15 eingenommenen Schaltstellung in unterschiedlicher Weise fluidisch miteinander zu verknüpfen. Es besteht insbesondere die Möglichkeit, einen ersten Ventilkanal 10 mit wahlweise einem zweiten Ventilkanal 20 oder einem dritten Ventilkanal 30 oder einem vierten Ventilkanal 40 fluidisch zu verbinden und dabei gleichzeitig von den anderen Ventilkanälen fluidisch abzutrennen. Auch die vom ersten Ventilkanal 10 jeweils abgetrennten Ventilkanäle stehen untereinander in keiner Fluidverbindung.

Diese Funktionalität ermöglicht mit nur einem Ventil eine sehr variable Ansteuerung eines an den ersten Ventilkanal 10 angeschlossenen Verbrauchers mit unterschiedlichen Fluiddrükken, die an die anderen drei Ventilkanäle 20, 30, 40 angelegt werden. Beispielsweise besteht die Möglichkeit, an einem der vorgenannten drei Ventilkanäle ein erstes Vakuum, an einem anderen dieser drei Ventilkanäle ein zweites Vakuum und am dritten dieser drei Ventilkanäle den atmosphärischen Druck anzulegen. Weitere Möglichkeiten bestehen im Anlegen von Vakuum/Überdruck/Atmosphärendruck oder erster Überdruck/zweiter Überdruck/atmosphärischer Druck oder drei verschiedene atmosphärische Überdrücke oder drei verschiedene atmosphärische Unterdrücke, also jeweils Vakuum.

Die vier Ventilkanäle 10, 20, 30, 40 münden in axial beabstandeten Bereichen insbesondere umfangsseitig in die Ventilkammer 12 ein. Der mit dem ersten Ventilkanal 10 ständig kommunizierende Längenabschnitt der Ventilkammer 12 sei als erster Ventilkammerabschnitt 10a bezeichnet. Die mit dem zweiten, dritten und vierten Ventilkanal 20, 30, 40 kommunizierenden Längenabschnitte der Ventilkammer 12 sind im Folgenden als zweiter Ventilkammerabschnitt 20a, dritter Ventilkammerabschnitt 30a und vierter Ventilkammerabschnitt 40a bezeichnet.

Diese vier Ventilkammerabschnitte sind mit einer dahingehenden Abfolge in der Ventilkammer 12 angeordnet, dass der erste Ventilkammerabschnitt 10a und der vierte Ventilkammerabschnitt 40a axial zwischen den außen liegenden zweiten und dritten Ventilkammerabschnitten 20a, 30a liegen. Beginnend mit dem einen, außenliegenden zweiten Ventilkammerabschnitt 20a sind die Ventilkammerabschnitte so verteilt, dass sich daran zunächst der erste Ventilkammerabschnitt 10a, dann der vierte Ventilkammerabschnitt 40a und letztlich der dritte Ventilkammerabschnitt 30a anschließt.

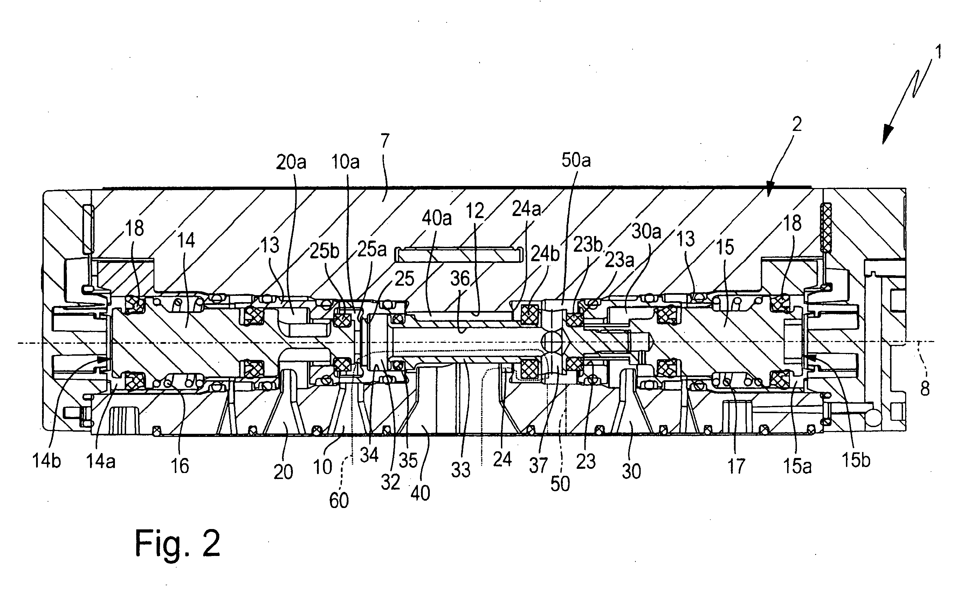

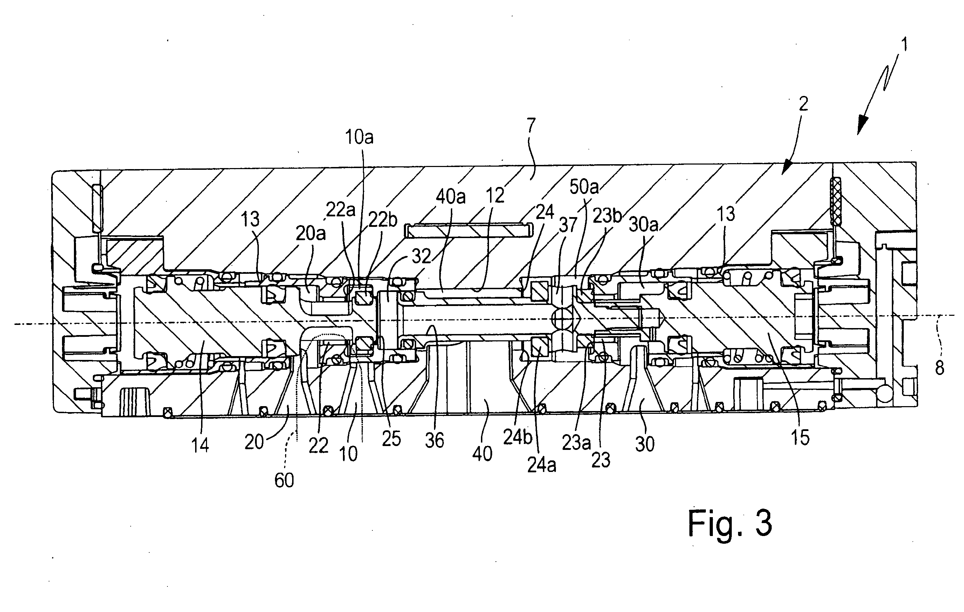

Wenn beide Ventilglieder 14, 15 die aus Figur 2 ersichtliche erste Schaltstellung einnehmen, steht der erste Ventilkanal 10 mit dem vierten Ventilkanal 40 in Fluidverbindung, indem die beiden Ventilglieder gemeinsam eine Fluidverbindung zwischen dem ersten Ventilkammerabschnitt 10a und dem vierten Ventilkammerabschnitt 40a freischalten. Durch Umschalten des ersten Ventilgliedes 14 in die zweite Schaltstellung trennt das erste Ventilglied 14 den ersten Ventilkanal 10 vom vierten Ventilkanal 40 ab und verbindet ihn stattdessen mit dem zweiten Ventilkanal 20. Indem gleichzeitig das zweite Ventilglied die erste Schaltstellung einnimmt, trennt dieses zweite Ventilglied den dritten Ventilkanal 30 von allen anderen Ventilkanälen ab. Somit erhält man ausschließlich eine Fluidverbindung zwischen dem ersten Ventilkanal 10 und dem zweiten Ventilkanal 20, wie dies aus Figur 3 ersichtlich ist.

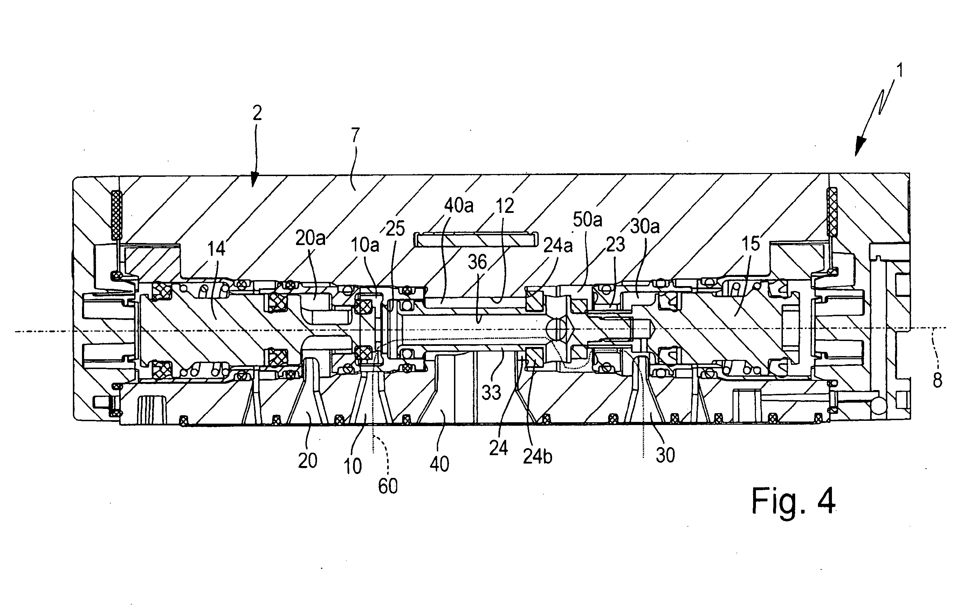

Positioniert man gemäß Figur 4 das erste Ventilglied 14 in der ersten Schaltstellung und das zweite Ventilglied 15 in der zweiten Schaltstellung, erhält man eine Fluidverbindung zwischen dem ersten Ventilkanal 10 und dem dritten Ventilkanal 30. Das erste Ventilglied 14 trennt hier den ersten Ventilkanal 10 wie auch schon gemäß Figur 2 vom zweiten Ventilkanal 20 ab und gleichzeitig gibt das zweite Ventilglied 15 die in der ersten Schaltstellung noch abgetrennte Verbindung zum ersten Ventilkanal 10 frei.

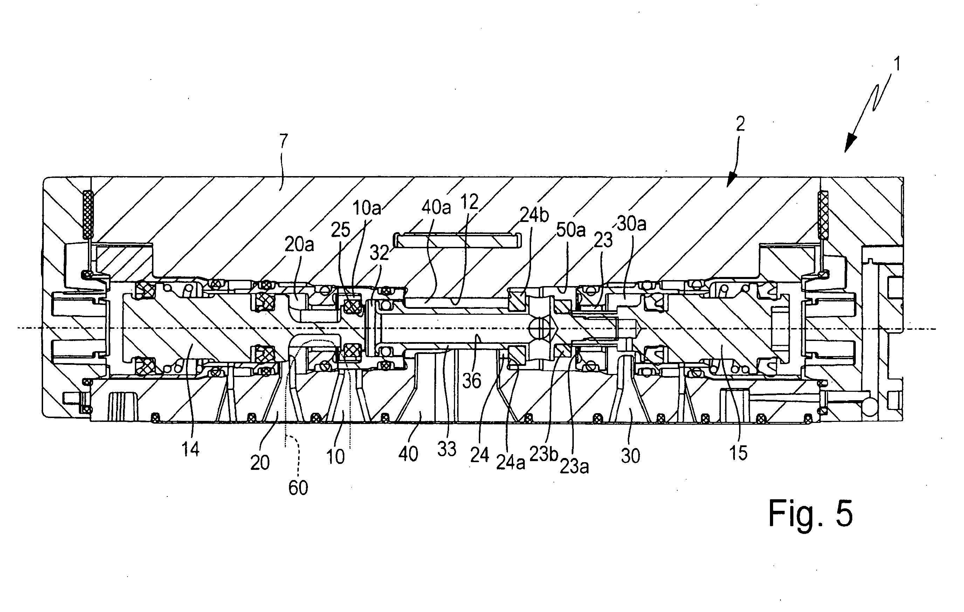

Die Figur 5 schließlich zeigt einen weiteren möglichen Betriebszustand des Ventils, bei dem sich beide Ventilglieder 14, 15 in der zweiten Schaltstellung befinden. Das Resultat dieses Betriebszustandes ist das gleiche wie gemäß Figur 3, es liegt also eine Verbindung des ersten Ventilkanals 10 mit dem zweiten Ventilkanal 20 vor. Auf Grund der besonderen Ausgestaltung der beiden Ventilglieder 14, 15 ist die in der zweiten Schaltstellung des ersten Ventilgliedes vorhandene Fluidbeaufschlagung des ersten Ventilkanals 10 unabhängig von der momentanen Schaltstellung des zweiten Ventilgliedes 15. Dieser Umstand zeigt auch, dass die Möglichkeit besteht, beide Ventilglieder 14, 15 völlig unabhängig voneinander in jeder ihrer beiden Schaltstellungen zu positionieren, die Ventilglieder behindern sich nicht gegenseitig.

Der erste und zweite Ventilkammerabschnitt 10a, 20a sind durch einen ringförmigen ersten Fluiddurchlass 22 miteinander verbunden, der konzentrisch zwischen der Hülsenanordnung 13 und dem ersten Ventilglied 14 ausgebildet ist. Dieser erste Fluiddurchlass 22 ist umrahmt von einem ringförmigen, axial dem ersten Ventilkammerabschnitt 10a zugewandten ersten Ventilsitz 22a. Im Innern des ersten Ventilkammerabschnittes 10a befindet sich ein von einem ringförmigen radialen Vorsprung des ersten Ventilgliedes 14 gebildeter erster Sitzventilabschnitt 22b, der zweckmäßigerweise von einem als Bestandteil des ersten Ventilgliedes 14 ausgeführten Dichtungsring gebildet ist. Der erste Ventilsitz 22a und der erste Sitzventilabschnitt 22b bilden gemeinsam eine erste Sitzventilstruktur, die es ermöglicht, den ersten Fluiddurchlass 22 zu steuern, indem dieser erste Fluiddurchlass 22 bei vom ersten Ventilsitz 22a abgehobenem erstem Sitzventilabschnitt 22b freigegeben ist und bei am ersten Ventilsitz 22a anliegendem erstem Sitzventilabschnitt 22b verschlossen ist. Der erste Sitzventilabschnitt 22b liegt in der ersten Schaltstellung des ersten Ventilgliedes 14 am ersten Ventilsitz 22a an und ist in der zweiten Schaltstellung von diesem ersten Ventilsitz 22a abgehoben.

Axial zwischen dem dritten Ventilkammerabschnitt 30a und dem vierten Ventilkammerabschnitt 40a befindet sich ein weiterer Ventilkammerabschnitt 50a, der im Folgenden der besseren Unterscheidung wegen als "Zwischenabschnitt 50a" bezeichnet sei. In diesem Zwischenabschnitt 50a befindet sich ein vergleichbar dem ersten Sitzventilabschnitt 22b ausgebildeter zweiter Sitzventilabschnitt 23b des zweiten Ventilgliedes 15, dem ein axial orientierter, ringförmiger zweiter Ventilsitz 23a zugewandt ist, der einen ringförmigen zweiten Fluiddurchlass 23 umrahmt, welcher den dritten Ventilkammerabschnitt 30a mit dem Zwischenabschnitt 50a verbindet.

Der zweite Ventilsitz 23a und der zweite Sitzventilabschnitt 23b bilden auch eine (zweite) Sitzventilstruktur, die in der schon erläuterten Weise arbeitet. In der ersten Schaltstellung ist somit der zweite Fluiddurchlass 23 durch den am zweiten Ventilsitz 23a anliegenden zweiten Sitzventilabschnitt 23b versperrt, während er in der zweiten Schaltstellung freigegeben ist.

An der Steuerung der Fluidverbindung zwischen dem ersten Ventilkanal 10 und dem vierten Ventilkanal 40 wirkt eine weitere, dritte Sitzventilstruktur mit. Diese dritte Sitzventilstruktur steuert einen axial zwischen dem weiteren Ventilkammerabschnitt bzw. Zwischenabschnitt 50a und dem vierten Ventilkammerabschnitt 40a angeordneten dritten Fluiddurchlass 24, der vergleichbar dem ersten und zweiten Fluiddurchlass 22, 23 von einem dem Zwischenabschnitt 50a axial zugewandten dritten Ventilsitz 24a umrahmt ist, welchem ein am zweiten Ventilglied 15 angeordneter, innerhalb des Zwischenabschnittes 50a liegender dritter Sitzventilabschnitt 24b gegenüberliegt. Das zweite Ventilglied 15 gibt somit in der ersten Schaltstellung den dritten Fluiddurchlass 24 zur Herstellung einer Fluidverbindung zwischen dem vierten Ventilkammerabschnitt 40a und dem weiteren Ventilkammerabschnitt bzw. Zwischenabschnitt 50a frei. In der zweiten Schaltstellung liegt der dritte Sitzventilabschnitt 24b am dritten Ventilsitz 24a an und sperrt diese Fluidverbindung ab.

Die Betriebszustände der dritten Sitzventilkontur 24a, 24b und der zweiten Sitzventilkontur 23a, 23b sind stets gegensinnig. Wenn in der ersten Schaltstellung des zweiten Ventilgliedes 15 der dritte Fluiddurchlass 24 freigegeben ist, findet sich der zweite Fluiddurchlass 23 gleichzeitig im verschlossenen Zustand. In entsprechender Weise ist der zweite Fluiddurchlass 23 offen, wenn der dritte Fluiddurchlass 24 verschlossen ist.

Eine weitere, dem ersten Ventilglied 14 zugeordnete vierte Sitzventilkontur ist in der Lage, einen zwischen dem Zwischenabschnitt 50a und dem ersten Ventilkammerabschnitt 10a angeordneten vierten Fluiddurchlass 25 zu steuern, um somit den Zwischenabschnitt 50a unabhängig von der Schaltstellung des zweiten Ventilgliedes 15 in der ersten Schaltstellung des ersten Ventilgliedes 14 mit dem ersten Ventilkanal 10 zu verbinden oder in der zweiten Schaltstellung des ersten Ventilgliedes 14 von dem ersten Ventilkanal 10 abzutrennen.

Der vierte Fluiddurchlass 25 begrenzt unmittelbar den ersten Ventilkammerabschnitt 10a, und zwar axial gegenüberliegend zum ersten Fluiddurchlass 22. Die vierte Sitzventilstruktur enthält einen dem ersten Ventilkammerabschnitt 10a axial zugewandten, den vierten Fluiddurchlass 25 umrahmenden vierten Ventilsitz 25a und einen innerhalb des ersten Ventilkammerabschnittes 10a am ersten Ventilglied 14 angeordneten vierten Sitzventilabschnitt 25b. In vorteilhafter Weise sind hierbei der vierte Sitzventilabschnitt 25b und der erste Sitzventilabschnitt 22b in Baueinheit ausgebildet und bestehen exemplarisch aus einem einzigen ringförmigen Dichtelement, das auf einem Grundkörper des ersten Ventilgliedes 14 sitzt.

Der vierte Fluiddurchlass 25 schließt sich nicht direkt an den Zwischenabschnitt 50a an, sondern an einen weiteren Ventilkammerabschnitt, der im Folgenden als Übergangs-Ventilkammerabschnitt 32 bezeichnet wird. Dieser befindet sich in dem dem zweiten Ventilglied 15 zugewandten Endbereich der das erste Ventilglied 14 umschließenden Hülsenanordnung 13.

Somit befindet sich der vierte Ventilkammerabschnitt 40a axial zwischen einerseits dem Zwischenabschnitt 50a und andererseits dem Übergangs-Ventilkammerabschnitt 32.

Den dem ersten Ventilglied 14 zugewandten inneren Endabschnitt des zweiten Ventilgliedes 15 bildet ein bevorzugt rohrförmig ausgebildeter Überbrückungsabschnitt 33, der den vierten Ventilkammerabschnitt 40a unter Belassung eines radialen Zwischenraumes durchsetzt und somit überbrückt. Der Überbrückungsabschnitt 33 taucht mit seinem dem ersten Ventilglied 14 zugewandten freien Ende in den Übergangs-Ventilkammerabschnitt 32 ein und steht mit dessen Umfangswand 34 axial gleitverschieblich und zugleich abgedichtet in Verbindung. Exemplarisch trägt er zu diesem Zweck an seinem Außenumfang einen Dichtungsring 35, der an der Umfangswand 34 gleitverschieblich anliegt.

Der Überbrückungsabschnitt 33 ist zweckmäßigerweise rohrförmig ausgebildet und beinhaltet jedenfalls einen als Überbrükkungskanal 36 bezeichneten Fluidkanal, der einerseits stirnseitig an dem Überbrückungsabschnitt 33 zu dem Übergangs-Ventilkammerabschnitt 32 ausmündet und andererseits über eine oder mehrere Verbindungsöffnungen 37 mit dem Zwischenabschnitt 50a in ständiger Fluidverbindung steht. Die mindestens eine Verbindungsöffnung 37 befindet sich am Außenumfang des zweiten Ventilgliedes 15 in einem axial zwischen dem zweiten Sitzventilabschnitt 23b und dem dritten Sitzventilabschnitt 24b liegenden Bereich.

Nachfolgend sollen nochmals die einzelnen Betriebszustände zusammengefasst erläutert werden, wobei die gepunktete Linie 60 jeweils die freigegebene Fluidverbindung bzw. den Strömungspfad des den ersten Ventilkanal 10 versorgenden Druckmediums darstellt.

In dem Betriebszustand gemäß Figur 2 kann ein in den vierten Ventilkanal 40 eingespeistes Druckmedium durch den offenen dritten Fluiddurchlass 24 hindurch in den Zwischenabschnitt 50a einströmen und gelangt von dort durch den Überbrückungskanal 36 hindurch in den Übergangs-Ventilkammerabschnitt 32 und ausgehend von dort durch den offenen vierten Fluiddurchlass 25 hindurch in den ersten Ventilkammerabschnitt 10a und von dort in den ersten Ventilkanal 10. Die Verbindung des ersten Ventilkanals 10 zum zweiten Ventilkanal 20 ist durch die vierte Sitzventilstruktur 25a, 25b abgetrennt. Gleichzeitig ist der dritte Ventilkanal 30 vom Zwischenabschnitt 50a durch die zweite Sitzventilstruktur 23a, 23b abgetrennt.

Wird ausgehend vom Betriebszustand der Figur 2 unter Beibehaltung der ersten Schaltstellung des ersten Ventilgliedes 14 das zweite Ventilglied 15 in die zweite Schaltstellung umgeschaltet, ergibt sich der in Figur 4 gezeigte Betriebszustand. Hier ist der dritte Fluiddurchlass 24 durch die dritte Sitzventilstruktur 24a, 24b abgesperrt und folglich der Zwischenabschnitt 50a vom vierten Ventilkanal 40 abgetrennt. Gleichzeitig ist aber der zweite Fluiddurchlass 23 offen, so dass über den dritten Ventilkanal 30 eingespeistes Druckmedium über den dritten Ventilkammerabschnitt 30a, den dritten Fluiddurchlass 24 und den Zwischenabschnitt 50 in den Überbrückungskanal 36 einströmen kann, um von dort aus vergleichbar des Betriebszustandes aus Figur 2 in den ersten Ventilkanal 10 zu gelangen.

Verglichen mit dem Betriebszustand der Figur 2 ist im Betriebszustand der Figur 4 das zweite Ventilglied 15 mit seinem Überbrückungsabschnitt 33 axial tiefer in den Übergangs-Ventilkammerabschnitt 32 eingetaucht.

Ersichtlich erfolgt sowohl die Fluidverbindung zwischen dem ersten Ventilkanal 10 und dem vierten Ventilkanal 40 als auch die Fluidverbindung zwischen dem ersten Ventilkanal 10 und dem dritten Ventilkanal 30 durch das zweite Ventilglied 15 hindurch, und zwar unabhängig von dessen Schaltstellung.

In dem aus Figur 3 ersichtlichen Betriebszustand nimmt das zweite Ventilglied 15 die erste Schaltstellung ein, so dass wie beim Betriebszustand der Figur 2 eine Fluidverbindung zwischen dem vierten Ventilkanal 40 und, durch den Überbrükkungskanal 36 hindurch, dem Übergangs-Ventilkammerabschnitt 32 vorliegt. Allerdings kann das über den vierten Ventilkanal 40 eingespeiste Fluid nicht weiterströmen, weil das erste Ventilglied 14 die zweite Schaltstellung einnimmt und folglich der vierte Fluiddurchlass 25 abgesperrt ist. Somit ist lediglich die Fluidverbindung zwischen dem zweiten Ventilkanal 20 und dem ersten Ventilkanal 10 freigegeben, und zwar durch den ersten Fluiddurchlass 22 hindurch.

Ein am dritten Ventilkanal 30 anstehendes Druckmedium kann ebenfalls nicht zum ersten Ventilkanal 10 strömen, weil es auf Grund des abgesperrten zweiten Fluiddurchlasses 23 im dritten Ventilkammerabschnitt 30a zurückgehalten wird, ebenso wie auch im Betriebszustand der Figur 2.

In dem Betriebszustand der Figur 5 ist verglichen mit dem Betriebszustand der Figur 3 nur die Schaltstellung des zweiten Ventilgliedes 15 geändert. Somit ist der vierte Ventilkanal 40 vom Zwischenabschnitt 50a abgetrennt und der Übergangs-Ventilkammerabschnitt 32 steht durch den Überbrückungsabschnitt 33 hindurch mit dem dritten Ventilkanal 30 in Verbindung. Dies wirkt sich jedoch wiederum nicht auf die Druckverhältnisse am ersten Ventilkanal 10 aus, weil das in der zweiten Schaltstellung befindliche erste Ventilglied 14 den vierten Fluiddurchlass 25 weiterhin geschlossen hält.

Abschließend sei noch auf die optionale Möglichkeit verwiesen, einen lediglich in Figur 2 strichpunktiert angedeuteten fünften Ventilkanal 50 vorzusehen, der mit dem Zwischenabschnitt 50a kommuniziert und der optional nutzbar ist. Beispielsweise kann dieser fünfte Ventilkanal 50 anstelle des vierten Ventilkanals 40 genutzt werden.

Das Ventil 1 kann auch so genutzt werden, dass in den ersten Ventilkanal 10 ein Druckmedium eingespeist wird, das dann je nach Betriebszustand zu wahlweise einem der anderen drei Ventilkanäle ausgegeben werden kann.

## Patentansprüche

1. Ventil, mit einem ersten und einem zweiten Ventilglied (14, 15), die axial aufeinanderfolgend und axial relativ zueinander bewegbar in einer gemeinsamen Ventilkammer (12) angeordnet und jeweils axial zwischen einer außenliegenden ersten Schaltstellung und einer innenliegenden zweiten Schaltstellung umschaltbar sind, wobei das erste Ventilglied (14) in seiner ersten Schaltstellung einen ersten Ventilkanal (10) von einem zweiten Ventilkanal (20) abtrennt und in seiner zweiten Schaltstellung den ersten Ventilkanal (10) mit dem zweiten Ventilkanal (20) verbindet, wobei ferner das zweite Ventilglied (15) bei in der ersten Schaltstellung befindlichem ersten Ventilglied (14) den ersten Ventilkanal (10) durch das zweite Ventilglied (15) hindurch mit einem dritten Ventilkanal (30) verbindet und von einem vierten Ventilkanal (40) abtrennt, wenn es sich in der zweiten Schaltstellung befindet und den ersten Ventilkanal (10) bei gleichzeitiger Verbindung mit dem vierten Ventilkanal (40) von dem dritten Ventilkanal (30) abtrennt, wenn es sich in der ersten Schaltstellung befindet, derart, dass der erste Ventilkanal (10) bei gleichzeitiger Abtrennung von den jeweiligen anderen Ventilkanälen alternativ mit dem zweiten, dritten oder vierten Ventilkanal (20, 30, 40) verbindbar ist, **dadurch gekennzeichnet, dass** die in der ersten Schaltstellung des zweiten Ventilgliedes (15) vorliegende Fluidverbindung zwischen dem ersten Ventilkanal (10) und dem vierten Ventilkanal (40) durch das zweite Ventilglied (15) hindurch erfolgt.

2. Ventil nach Anspruch 1, **dadurch gekennzeichnet, dass** der erste und der vierte Ventilkanal (10, 40) bezogen auf die Längsachse (8) der Ventilkammer (12) axial zwischen dem zweiten und dem dritten Ventilkanal (20, 30) in die Ventilkammer (12) einmünden, wobei der erste Ventilkanal (10) axial beabstandet zu dem zweiten Ventilkanal (20) und der vierte Ventilkanal (40) axial beabstandet zu dem dritten Ventilkanal (30) in die Ventilkammer (12) einmündet.

3. Ventil nach Anspruch 1 oder 2, **dadurch gekennzeichnet, dass** die beiden Ventilglieder (14, 15) kolbenförmig ausgebildet sind.

4. Ventil nach einem der Ansprüche 1 bis 3, **dadurch gekennzeichnet, dass** beide Ventilglieder (14, 15) durch Federmittel (16, 17) in die als Grundstellung fungierende erste Schaltstellung vorgespannt sind, wobei zweckmäßigerweise jedem Ventilglied (14, 15) eigene Federmittel (16, 17) zugeordnet sind, die insbesondere in einer das zugeordnete Ventilglied (14, 15) koaxial umschließenden Weise angeordnet sind.

5. Ventil nach einem der Ansprüche 1 bis 4, **dadurch gekennzeichnet, dass** es mit einer Vorsteuerventileinrichtung (3) zum durch Fluidkraft hervorrufbaren Umschalten jedes Ventilgliedes (14, 15) ausgestattet ist.

6. Ventil nach einem der Ansprüche 1 bis 5, **dadurch gekennzeichnet, dass** in der Ventilkammer (12) zur Steuerung der Fluidverbindung zwischen den Ventilkanälen (10, 20, 30, 40) abwechselnd verschließbare und freigebbare Fluiddurchlässe (22, 23, 24, 25) angeordnet sind, wobei jedem dieser Fluiddurchlässe zu seiner Steuerung ausschließlich eine Sitzventilstruktur zugeordnet ist.

7. Ventil nach Anspruch 6, **dadurch gekennzeichnet, dass** sämtlichen steuerbaren Fluiddurchlässen (22, 23, 24, 25) jeweils eine Sitzventilstruktur zugeordnet ist.

8. Ventil nach einem der Ansprüche 1 bis 7, **dadurch gekennzeichnet, dass** der erste Ventilkanal (10) seitlich in einen ersten Ventilkammerabschnitt (10a) einmündet, der über einen von einem ihm axial zugewandten ersten Ventilsitz (22a) umrahmten ersten Fluiddurchlass (22) mit einem axial weiter außen liegenden und mit dem zweiten Ventilkanal (20) kommunizierenden zweiten Ventilkammerabschnitt (20a) verbunden ist, wobei diese Verbindung durch einen in dem ersten Ventilkammerabschnitt (10a) angeordneten und mit dem ersten Ventilsitz (22a) kooperierenden ersten Sitzventilabschnitt (22b) des ersten Ventilgliedes (14) steuerbar ist.

9. Ventil nach Anspruch 8, **dadurch gekennzeichnet, dass** der dritte Ventilkanal (30) in einen dritten Ventilkammerabschnitt (30a) einmündet, der über einen von einem ihm axial abgewandten, nach axial innen weisenden zweiten Ventilsitz (23a) umrahmten zweiten Fluiddurchlass (23) mit einem sich axial innen anschließenden weiteren Ventilkammerabschnitt (50a) verbunden ist, wobei diese Verbindung durch einen in dem weiteren Ventilkammerabschnitt (50a) angeordneten und mit dem zweiten Ventilsitz (23a) kooperierenden zweiten Sitzventilabschnitt (23b) des zweiten Ventilgliedes (15) steuerbar ist.

10. Ventil nach Anspruch 9, **dadurch gekennzeichnet, dass** der weitere Ventilkammerabschnitt (50a) über einen von einem ihm axial zugewandten dritten Ventilsitz (24a) umrahmten dritten Fluiddurchlass (24) mit einem axial benachbarten und mit dem vierten Ventilkanal (40) in Verbindung stehenden vierten Ventilkammerabschnitt (40a) verbunden ist, wobei diese Verbindung durch einen in dem weiteren Ventilkammerabschnitt (50a) angeordneten und mit dem dritten Ventilsitz (24a) kooperierenden dritten Sitzventilabschnitt (24b) des zweiten Ventilgliedes (15) steuerbar ist, derart, dass der weitere Ventilkammerabschnitt (50a) in der zweiten Schaltstellung des zweiten Ventilgliedes (15) mit dem dritten Ventilkammerabschnitt (30a) und in der ersten Schaltstellung des zweiten Ventilgliedes (15) mit dem vierten Ventilkammerabschnitt (40a) verbunden ist, wobei das erste Ventilglied (14) den weiteren Ventilkammerabschnitt (50a) in der ersten Schaltstellung mit dem ersten Ventilkanal (10) verbindet und in der zweiten Schaltstellung von dem ersten Ventilkanal (10) abtrennt.

11. Ventil nach Anspruch 10, **dadurch gekennzeichnet, dass** die Fluidverbindung zwischen dem weiteren Ventilkammerabschnitt (50a) und dem ersten Ventilkanal (10) durch das zweite Ventilglied (15) hindurch erfolgt.

12. Ventil nach einem der Ansprüche 1 bis 11, **dadurch gekennzeichnet, dass** dem ersten Ventilglied (14) eine vierte Sitzventilstruktur (25a, 25b) zugeordnet ist, die die Verbindung zwischen einem mit dem ersten Ventilkanal (10) kommunizierenden ersten Ventilkammerabschnitt (10a) und einem sich axial daran anschließenden Übergangs-Ventilkammerabschnitt (32) steuert, mit dem unter Abdichtung und axial gleitverschieblich ein Überbrückungsabschnitt (33) des zweiten Ventilgliedes (15) in Eingriff steht, der einen mit dem vierten Ventilkanal (40) kommunizierenden vierten Ventilkammerabschnitt (40a) durchsetzt und in dem ein ständig mit dem Übergangs-Ventilkammerabschnitt (32) kommunizierender Überbrückungskanal (34) verläuft, der zu einem sich axial an den vierten Ventilkammerabschnitt (40a) anschließenden weiteren Ventilkammerabschnitt (50a) ausmündet, der durch jeweils eine dem zweiten Ventilglied (15) zugeordnete dritte und zweite Sitzventilstruktur (24a, 24b; 23a, 23b) alternativ mit entweder dem vierten Ventilkammerabschnitt (40a) oder einem axial entgegengesetzten, mit dem dritten Ventilkanal (30) kommunizierenden dritten Ventilkammerabschnitt (30a) verbindbar ist.

13. Ventil nach Anspruch 12, **dadurch gekennzeichnet, dass** der Überbrückungsabschnitt (33) gleitverschieblich in das erste Ventilglied (14) eintaucht und zweckmäßigerweise rohrförmig ausgebildet ist.

14. Ventil nach Anspruch 12 oder 13, **dadurch gekennzeichnet, dass** in den weiteren Ventilkammerabschnitt (50a) ein optional nutzbarer fünfter Ventilkanal (50) einmündet.

15. Ventil nach einem der Ansprüche 1 bis 14, **dadurch gekennzeichnet, dass** die beiden Ventilglieder (14, 15) unabhängig voneinander in ihren beiden Schaltstellungen positionierbar sind.

## Claims

1. Valve, with a first and a second valve member (14, 15) arranged axially consecutive and movable axially relative to one another in a common valve chamber (12), and each switchable between an outer-lying first switching position and an inner-lying second switching position, wherein the first valve member (14) in its first switching position isolates a first valve passage (10) from a second valve passage (20) and in its second switching position connects the first valve passage (10) with the second valve passage (20), wherein also the second valve member (15), with the first valve member (14) in the first switching position, connects the first valve passage (10) through the second valve member (15) to a third valve passage (30) and isolates it from a fourth valve passage (40) when it is in the second switching position and isolates the first valve passage (10) from the third valve passage (30) with simultaneous connection to the fourth valve passage (40), when it is in the first switching position, in such a way that the first valve passage (10) may be connected alternately to the second, third or fourth valve passages (20, 30, 40) with simultaneous isolation from the other respective valve passages, **characterised in that** the fluidic connection between the first valve passage (10) and the fourth valve passage (40) in the first switching position of the second valve member (15) is effected through the second valve member (15).

2. Valve according to claim 1, **characterised in that** the first and the fourth valve passage (10, 40), relative to the longitudinal axis (8) of the valve chamber (12), lead axially into the valve chamber (12) between the second and the third valve passage (20, 30), wherein the first valve passage (10) leads into the valve chamber (12) with axial clearance from the second valve passage (20), and the fourth valve passage (40) leads into the valve chamber (12) with axial clearance from the third valve passage (30).

3. Valve according to claim 1 or 2, **characterised in that** the two valve members (14, 15) are piston-shaped.

4. Valve according to any of claims 1 to 3, **characterised in that** both valve members (14, 15) are biased by spring means (16, 17) into the first switching position acting as normal position, wherein expediently each valve member (14, 15) is assigned separate spring means (16, 17) which are in particular arranged so as to coaxially encompass the assigned valve member (14, 15).

5. Valve according to any of claims 1 to 4, **characterised in that** it is equipped with a pilot valve device (3) for switching each valve member (14, 15) which may be generated by fluidic force.

6. Valve according to any of claims 1 to 5, **characterised in that** fluid passages (22, 23, 24, 25) which may be closed and opened alternately are provided in the valve chamber (12) to control the fluidic connection between the valve passages (10, 20, 30, 40), wherein each of these fluid passages is assigned exclusively one seating valve structure for its control.

7. Valve according to claim 6, **characterised in that** in each case one seating valve structure is assigned to all controllable fluid passages (22, 23, 24, 25).

8. Valve according to any of claims 1 to 7, **characterised in that** the first valve passage (10) leads into the side of a first valve chamber section (10a), which is connected by a first fluid passage (22) bordered by an axially facing first valve seat (22a) to a second valve chamber section (20a) lying axially further outwards and communicating with the second valve passage (20), wherein this connection may be controlled by a first seating valve section (22b) of the first valve member (14) located in the first valve chamber section (10a) and cooperating with the first valve seat (22a).

9. Valve according to claim 8, **characterised in that** the third valve passage (30) leads into a third valve chamber section (30a) which is connected by a second fluid passage (23), bordered by a second valve seat (23a) facing axially away from it and directed axially inwards, to an axially inwards adjoining further valve chamber section (50a), wherein this connection may be controlled by a second seating valve section (23b) of the second valve member (15) located in the further valve chamber section (50a) and cooperating with the second valve seat (23a).

10. Valve according to claim 9, **characterised in that** the further valve chamber section (50a) is connected by a third fluid passage (24) bordered by an axially facing third valve seat (24a) to an axially adjacent fourth valve chamber section (40a) which is in connection with the fourth valve passage (40), wherein this connection may be controlled by a third seating valve section (24b) of the second valve member (15) located in the further valve chamber section (50a) and cooperating with the third valve seat (24a) in such a way that the further valve chamber section (50a) in the second switching position of the second valve member (15) is connected to the third valve chamber section (30a) and in the first switching position of the second valve member (15) to the fourth valve chamber section (40a), wherein the first valve member (14) connects the further valve chamber section (50a) in the first switching position with the first valve passage (10) and in the second switching position isolates it from the first valve passage (10).

11. Valve according to claim 10, **characterised in that** the fluidic connection width the further valve chamber section (50a) and the first valve passage (10) is made through the second valve member (15).

12. Valve according to any of claims 1 to 11, **characterised in that** the first valve member (14) is assigned a fourth seating valve structure (25a, 25b) which controls the connection between a first valve chamber section (10a) communicating with the first valve passage (10) and an axially adjacent transition-valve chamber section (32) which is in engagement, with sealing and with an axial sliding capability, with a bridging section (33) of the second valve member (15) which passes through a fourth valve chamber section (40a) communicating with the fourth valve passage (40) and in which runs a bridging passage (34) in constant communication with the transition-valve chamber section (32) and opening out at a further valve chamber section (50a) axially adjoining the fourth valve chamber section (40a) and which may be connected alternately by in each case one third and second seating valve structure (24a, 24b; 23a, 23b) assigned to the second valve member (15) to either the fourth valve chamber section (40a) or an axially opposite third valve chamber section (30a) communicating with the third valve passage (30).

13. Valve according to claim 12, **characterised in that** the bridging section (33) dips with sliding movement into the first valve member (14) and is expediently tubular in form.

14. Valve according to claim 12 or 13, **characterised in that** an optional usable fifth valve passage (50) leads into the further valve chamber section (50a).

15. Valve according to any of claims 1 to 14, **characterised in that** the two valve members (14, 15) may be positioned in their two switching positions independently of one another.

## Revendications

1. Soupape comportant un premier élément de soupape et un deuxième élément de soupape (14, 15), lesquels sont disposés de manière à pouvoir se déplacer en se suivant de manière axiale et de manière axiale l'un par rapport à l'autre, dans une chambre de soupape (12) commune et peuvent être commutés respectivement de manière axiale entre une première position de commutation se trouvant à l'extérieur et une deuxième position de commutation se trouvant à l'intérieur, sachant que le premier élément de soupape (14) sépare dans sa première position de commutation un premier canal de soupape (10) d'un deuxième canal de soupape (20) et relie dans sa deuxième position de commutation le premier canal de soupape (10) au deuxième canal de soupape (20), sachant en outre que le deuxième élément de soupape (15) relie à travers le deuxième élément de soupape (15) le premier canal de soupape (10) à un troisième canal de soupape (30) lorsque le premier élément de soupape (14) se trouve dans la première position de commutation et le sépare d'un quatrième canal de soupape (40), lorsqu'il se trouve dans la deuxième position de commutation et sépare le premier canal de soupape (10) du troisième canal de soupape (30) tout en établissant de manière simultanée une liaison avec le quatrième canal de soupape (40) lorsqu'il se trouve dans la première position de commutation de telle manière que le premier canal de soupape (10) peut être relié en variante au deuxième, au troisième ou au quatrième canal de soupape (20, 30, 40) tout en procédant à la séparation simultanée des autres canaux de soupape respectifs, **caractérisée en ce que** la liaison fluidique établie dans la première position de commutation du deuxième élément de soupape (15) s'effectue à travers le deuxième élément de soupape (15) entre le premier canal de soupape (10) et le quatrième canal de soupape (40).

2. Soupape selon la revendication 1, **caractérisée en ce que** le premier canal de soupape et le quatrième canal de soupape (10, 40) débouchent par rapport à l'axe longitudinal (8) de la chambre de soupape (12), de manière axiale entre le deuxième canal de soupape et le troisième canal de soupape (20, 30) dans la chambre de soupape (12), sachant que débouchent dans la chambre de soupape (12), le premier canal de soupape (10) de manière axiale à distance du deuxième canal de soupape (20) et le quatrième canal de soupape (40) de manière axiale à distance du troisième canal de soupape (30).

3. Soupape selon la revendication 1 ou 2, **caractérisée en ce que** les deux éléments de soupape (14, 15) sont réalisés de manière à présenter la forme d'un piston.

4. Soupape selon l'une quelconque des revendications 1 à 3, **caractérisée en ce que** les deux éléments de soupape (14, 15) sont précontraints par des moyens formant ressort (16, 17) dans la première position de commutation faisant office de position de base, sachant que des moyens formant ressort (16, 17) propres sont associés de manière appropriée à chaque élément de soupape (14, 15), lesquels sont disposés en particulier de manière à entourer de manière coaxiale l'élément de soupape (14, 15) associé.

5. Soupape selon l'une quelconque des revendications 1 à 4, **caractérisée en ce qu'**elle est équipée d'un dispositif de soupape de précommande (3) servant à procéder à la commutation de chaque élément de soupape (14, 15) pouvant être provoquée sous l'effet de la force fluidique.

6. Soupape selon l'une quelconque des revendications 1 à 5, **caractérisée en ce que** des passages de fluide (22, 23, 24, 5) pouvant être fermés et pouvant être libérés en alternance sont disposés dans la chambre de soupape (12) afin de commander la liaison fluidique entre les canaux de soupape (10, 20, 30, 40), sachant qu'uniquement une structure de soupape de siège est associée à chacun desdits passages de fluide aux fins de sa commande.

7. Soupape selon la revendication 6, **caractérisée en ce qu'**une structure de soupape de siège est respectivement associée à l'ensemble des passages de fluide (22, 23, 24, 25) pouvant être commandés.

8. Soupape selon l'une quelconque des revendications 1 à 7, **caractérisée en ce que** le premier canal de soupape (10) débouche latéralement dans une première section de chambre de soupape (10a), qui est reliée par l'intermédiaire d'un premier passage de fluide (22) encadré par un premier siège de soupape (22a) tourné vers ledit passage de manière axiale, à une deuxième section de chambre de soupape (20a) communiquant avec un canal de soupape se trouvant de manière axiale à l'extérieur et avec le deuxième canal de soupape (20), sachant que ladite liaison peut être commandée par une première section de soupape de siège (22b) du premier élément de soupape (14), disposée dans la première section de chambre de soupape (10a) et coopérant avec le premier siège de soupape (22a).

9. Soupape selon la revendication 8, **caractérisée en ce que** le troisième canal de soupape (30) débouche dans une troisième section de chambre de soupape (30a), qui est reliée par l'intermédiaire d'un deuxième passage de fluide (23) encadré par un deuxième siège de soupape (23a) lui étant opposé de manière axiale et orienté axialement vers l'intérieur, à une autre section de chambre de soupape (50a) se raccordant à l'intérieur de manière axiale, sachant que ladite liaison peut être commandée par une deuxième section de de soupape de siège (23b) du deuxième élément de soupape (15), disposée dans l'autre section de chambre de soupape (50a) et coopérant avec le deuxième siège de soupape (23a).

10. Soupape selon la revendication 9, **caractérisée en ce que** l'autre section de chambre de soupape (50a) est reliée par l'intermédiaire d'un troisième passage de fluide (24) encadré par un troisième siège de soupape (24a) tourné de manière axiale vers ce dernier, à une quatrième section de chambre de soupape (40a) adjacente axialement et en liaison avec le quatrième canal de soupape (40), sachant que la présente liaison peut être commandée par une troisième section de soupape de siège (24b) du deuxième élément de soupape (15), disposée dans l'autre section de chambre de soupape (50a) et coopérant avec le troisième siège de soupape (24a) de telle manière que l'autre section de chambre de soupape (50a) est reliée à la troisième section de chambre de soupape (30a) lorsque le deuxième élément de soupape (15) se trouve dans la deuxième position de commutation et est reliée à la quatrième section de chambre de soupape (40a) lorsque le deuxième élément de soupape (15) se trouve dans la première position de commutation, sachant que le premier élément de soupape (14) relie l'autre section de chambre de soupape (50a) dans la première position de commutation au premier canal de soupape (10) et sépare l'autre section de chambre de soupape (50a) dans la deuxième position de commutation du premier canal de soupape (10).

11. Soupape selon la revendication 10, **caractérisée en ce que** la liaison fluidique entre l'autre section de chambre de soupape (50a) et le premier canal de soupape (10) est effectuée à travers le deuxième élément de soupape (15).

12. Soupape selon l'une quelconque des revendications 1 à 11, **caractérisée en ce qu'**est associée au premier élément de soupape (14) une quatrième structure de soupape de siège (25a, 25b), laquelle commande la liaison entre une première section de chambre de soupape (10a) communiquant avec le premier canal de soupape (10) et une section de chambre de soupape de passage (32) s'y raccordant de manière axiale, avec laquelle une section de pontage (33) du deuxième élément de soupape (15) est en prise en étanchéifiant et de manière coulissante axialement, laquelle section de pontage traverse une quatrième section de chambre de soupape (40a) communiquant avec le quatrième canal de soupape (40) et dans laquelle s'étend un canal de pontage (34) communiquant en permanence avec la section de chambre de soupape de passage (32), lequel canal de pontage débouche en direction d'une autre section de chambre de soupape (50a) se raccordant de manière axiale à la quatrième section de chambre de soupape (40a) et pouvant être reliée par respectivement une troisième structure de soupape de siège associée au deuxième élément de soupape (15) et une deuxième structure de soupape de siège (24a, 24b ; 23a, 23b) en variante, à soit la quatrième section de chambre de soupape (40a) ou à une troisième section de chambre de soupape (30a) axialement opposée et communiquant avec le troisième canal de soupape (30).

13. Soupape selon la revendication 12, **caractérisée en ce que** la section de pontage (33) plonge de manière coulissante dans le premier élément de soupape (14) et est réalisée de manière appropriée de manière à présenter une forme tubulaire.

14. Soupape selon la revendication 12 ou 13, **caractérisée en ce qu'**un cinquième canal de soupape (50) pouvant être utilisé de manière facultative débouche à l'intérieur de l'autre section de chambre de soupape (50a).

15. Soupape selon l'une quelconque des revendications 1 à 14, **caractérisée en ce que** les deux éléments de soupape (14, 15) peuvent être positionnés indépendamment l'un de l'autre dans leurs deux positions de commutation.
